# FASCICULE DE BREVET EUROPEEN

(11) **EP 0 914 588 B1**
(45) Date de publication et mention de la délivrance du brevet: **02.11.2005**
(21) Numéro de dépôt: 97935594.8
(22) Date de dépôt: 22.07.1997
(51) Int. Cl.: G01B 7/02, G01B 7/14, A61G 7/057, A47C 27/08

(54) **PROCEDE ET DISPOSITIF A SELF INTEGREE DANS UN PONT DE MESURE**
INDUKTIVE MESSBRÜCKENANORDNUNG UND VERFAHREN ZU DEREN GEBRAUCH
INDUCTIVE BRIDGE CIRCUIT AND METHOD OF ITS USE

(30) Priorité: 23.07.1996 FR 9609205
(43) Date de publication de la demande: 12.05.1999
(73) Titulaire: HILL-ROM INDUSTRIES S.A., 34100 Montpellier (FR)
(72) Inventeur: MONTANT, Jean-Marc Résidence Las Rébes,, F-34080 Montpellier (FR); CAMINADE, Jean-Luc, F-34430 Saint Jean de Vedas (FR)
(74) Mandataire: Portal, Gérard
(86) Numéro de dépôt international: PCT/FR1997/001358
(87) Numéro de publication internationale: WO 1998/003835

(56) Documents cités:
- EP-A- 0 379 694
- EP-A- 0 676 158
- DE-A- 2 550 427
- DE-A- 4 231 616
- "Conception et développement de capteurs de proximité" JOURNAL DE L'EQUIPEMENT ELECTRIQUE ET ELECTRONIQUE, no. 306, novembre 1970, pages 116-117, XP002027296 cité dans la demande

## Description

L'invention concerne essentiellement un procédé et un dispositif intégrant une self dans un pont de mesure.

### Arrière plan technologique

On connaît par l'article publié dans "Journal de l'Equipement Electrique et Electronique", n° 306, novembre 1970, pages 116-117, des équipements compensateurs de température détectant des mouvements de déplacement de surfaces tels que des axes.

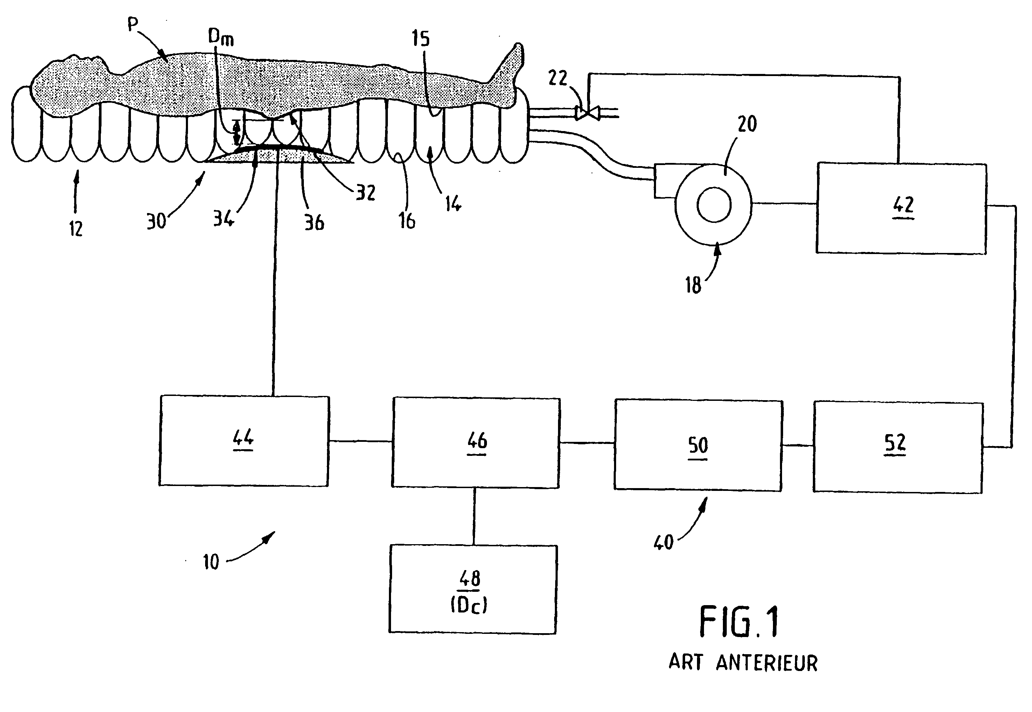

Il est décrit dans ce document une méthode de compensation d'une dérive thermique en utilisant deux transducteurs disposés dans deux branches successives d'un pont électronique, voir figure 1, et suffisamment proches pour qu'ils soient supposés être à la même température.

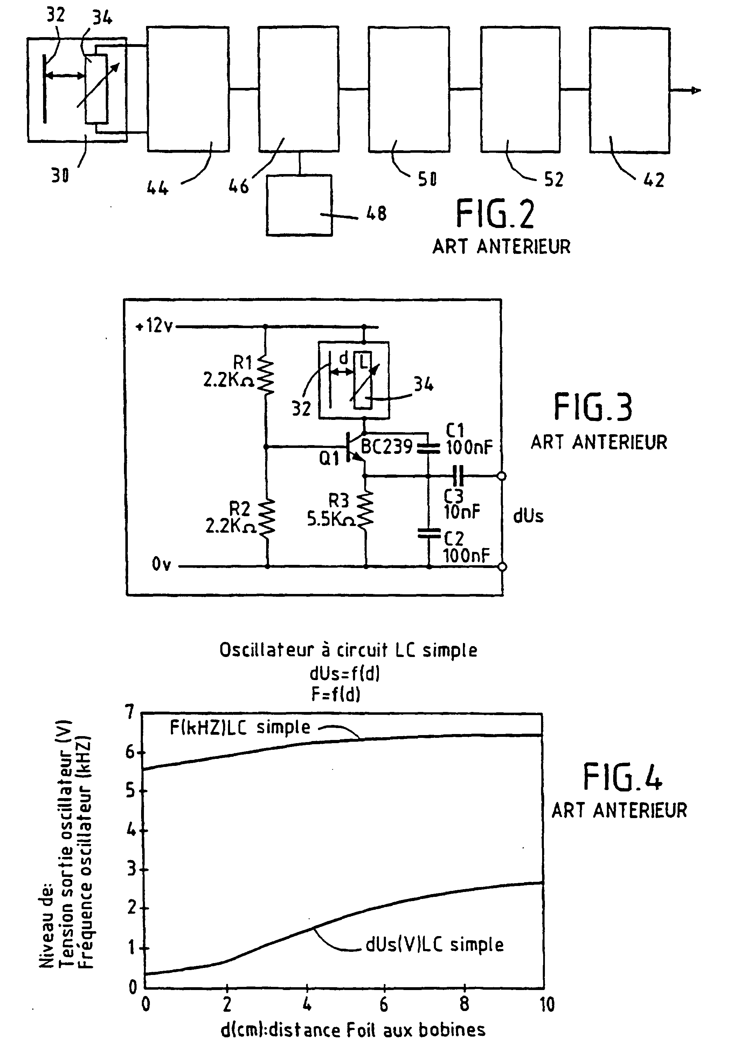

L'un des transducteurs dénommé référence, voir figure 2, disposé en face d'un espace qui est connu et fixe.

La figure 3 montre un pont électronique de compensation thermique totale avec des selfs d'induction.

Dans ce document, les deux transducteurs sont fixes et sont séparés par une distance fixe connue.

On connaît également par la demande allemande DE-A-2, 550, 427, correspondant à US-A-4, 160, 204, un système de mesure à distance sans contact comprenant un pont électronique particulièrement visible aux figures 1 et 3, ayant des branches parmi lesquelles la branche 20 présente une impédance variant en fonction de la distance et les autres branches 14, 16, 18 ont une impédance fixe, la branche 18 servant d'impédance de référence pour la comparaison de modifications de signaux dans la branche 20 causées par la modification d'impédance du transducteur 22, voir colonne 2, ligne 29-48 du document US.

La présente invention diffère de ce document par l'emploi d'un film souple, flexible, d'une feuille métallique mince qui est déplaçable et déformable dans l'espace et constitue une partie intégrante d'un élément de support pour supporter un élément à supporter, en particulier un patient P, de sorte qu'il était non évident pour un homme de l'art que le principe général d'un système de mesure de distance sans contact tel que décrit dans ce document pourrait être utilisé dans ce domaine technique du support, en particulier dans le domaine médical.

D'autres détecteurs de distance utilisant un circuit à pont électronique incorporant des capacités variables sont également décrits dans US- 5, 412, 327 et sa contrepartie DE-4, 231, 616.

Il est connu par le document EP-A-0 218 301 un procédé et un dispositif améliorant le support d'un patient comprenant un matelas pourvu d'une ou plusieurs chambres fermées remplies d'un fluide sous une pression de remplissage contrôlée, utilisant un dispositif de mesure à l'aide d'une combinaison de deux selfs 24, 25 représentées à la figure 4 notamment. Ce dispositif n'est pas très satisfaisant car il nécessite une alimentation éléctrique de chaque self, donc de la self mobile qui est disposée à proximité du patient, ce qui pose toujours un problème de sécurité.

Par ailleurs, le déposant a décrit dans le document FR-A-2.718.347 = EP-A-676.158 un procédé et un appareil de support d'un élément supporté, en particulier le corps d'un patient, permettant un support à une profondeur d'enfoncement contrôlée, essentiellement constante à l'aide d'un dispositif de mesure comprenant une self d'induction combinée à une feuille métallique située sous le corps à supporter, la feuille métallique étant déplacée en fonction de l'enfoncement du corps à supporter. Ce déplacement modifie le coefficient de self-induction de la self en éloignant la fréquence de raisonnance du circuit LC de la fréquence d'accord de l'oscillateur et entraine de ce fait un amortissement du signal délivré à un amplificateur par l'oscillateur.

De ce fait, ce dispositif antérieur du Déposant présente l'inconvénient d'un fonctionnement basé sur une variation de fréquence non souhaitable. En outre, la valeur de la tension obtenue est faible. Egalement, la variation de fréquence est peu compatible avec les normes de sécurité électro-magnétiques. Enfin, cette mesure de variation de fréquence est sensible aux masses métalliques environnantes.

La présente invention a pour but principal de fournir une solution pour résoudre le nouveau problème technique de mesurer le positionnement d'un élément à supporter en relation avec son volume et sa forme, en particulier avec la morphologie d'un patient.

Un autre objet principal de la présente invention est de fournir une solution qui rende possible de maintenir une fréquence sensiblement constante dans un système inductif pour mesurer la position d'un élément dont la forme varie fréquemment, en améliorant ainsi la compatibilité électromagnétique.

La présente invention a encore pour but principal de fournir une solution qui permette d'obtenir une variation de tension élevée en fonction du mouvement et de la déformation d'un élément de mesure résultant eux-mêmes du mouvement et de la déformation d'un dispositif de support déformable causés par l'action d'un élément à supporter, en particulier un patient, dans le but d'obtenir une déformation contrôlée dudit dispositif de support supportant ledit élément, ledit élément de mesure faisant partie d'un système inductif, par exemple comprenant une self d'induction.

La présente invention a encore pour but principal de fournir une solution qui permette de réaliser un blindage d'un système inductif pour mesurer le positionnement d'un dispositif de support déformable, déformation causée par l'action d'un élément à supporter, par exemple un patient, en ayant ainsi la forme du dispositif de support variant fréquemment, dit système inductif par exemple incluant une self d'induction, de sorte que le système est blindé vis à vis des parties métalliques environnantes

La présente invention résoud pour la première fois de manière simultanée l'ensemble des buts ci-dessus énoncés, d'une manière simple, peu coûteuse, utilisable à l'échelle industrielle et médicale.

Ainsi, selon un premier aspect, la présente invention fournit un appareil de support d'un élément à supporter, comprenant un patient, comprenant un dispositif de mesure pour mesurer le positionnement de l'élément supporté par un dispositif de support déformable comprenant un matelas avantageusement anti-escarre, et une déformation corrélée du dispositif de support déformable résultant de l'action dudit élément agissant sur ledit dispositif de support en relation avec le volume et la forme dudit élément supporté, ledit dispositif de mesure comprenant un film souple, flexible d'une feuille mince métallique déplaçable et déformable soumise à un déplacement et une déformation à mesurer, en relation avec le mouvement et la déformation du dispositif de support déformable, causés par ledit élément supporté, et un élément variateur d'impédance, comprenant une self d'induction de mesure de la distance de déplacement, dudit film souple, relié à un dispositif oscillateur, délivrant un signal fonction de la mesure de la distance de déplacement. Ledit dispositif de mesure comprend un pont électronique de mesure intégrant ledit élément variateur d'impédance de mesure, relié audit dispositif oscillateur, selon une configuration selon laquelle ledit oscillateur fonctionne à fréquence essentiellement constante; la branche du pont de mesure opposée à l'élément variateur d'impédance comprend une self d'induction de blindage.

Avantageusement, ce dispositif de support déformable comprend généralement au moins une chambre fermée gonflée ou dégonflée par introduction ou échappement d'un fluide, par exemple de l'air, comprenant une face supérieure et une face inférieure, ledit film souple, déformable d'une feuille mince métallique étant lié à ladite face supérieure de la chambre et ledit élément variateur d'impédance de mesure étant lié à ladite face inférieure de ladite chambre.

Selon une variante de réalisation particulière, la self d'induction de blindage est disposée à une distance prédéterminée de l'élément de mesure pour inhiber toute influence d'une masse métallique située en-dessous du dispositif de mesure ou dans son environnement.

Selon un autre mode de réalisation particulièrement avantageux de l'invention, ledit appareil comprend aussi des moyens de contrôle agissant sur des moyens d'asservissement de la pression de gonflage de la chambre pour maintenir, au cours du support, la position mesurée séparant la face supérieure de la face inférieure de la chambre de préférence à une valeur de distance prédéterminée, par exemple essentiellement constante, c'est-à-dire essentiellement égale à , ou dans une variation acceptable, relativement à une distance de consigne Dc. Ici, la position représente la distance mesurée séparant le point le plus près de la feuille métallique mince déformée liée à la face supérieure de la chambre, relativement à la face inférieure.

Selon une variante de réalisation avantageuse, les moyens de contrôle comprennent une centrale de commande comprenant une unité centrale électronique ou électromécanique, ayant une mémoire qui reçoit en permanence ou par intermittence des signaux proportionnels à la valeur de position mesurée Dm, transmis par les moyens de mesure précités, et qui comparent les valeurs de position mesurées Dm avec la valeur de position de consigne Dc, la centrale de commande commande en outre des moyens d'asservissement de la pression de gonflage de la chambre pour aboutir en permanence à une position mesurée Dm essentiellement égale à, ou dans une variation acceptable relativement à la distance de consigne Dc.

Selon une autre variante de réalisation avantageuse, la self de blindage est identique à la self d'induction, ce qui permet que lors d'influences extérieures par exemple causées par des éléments métalliques tels que le lit, la self de blindage et la self de mesure varient de manière identique.

Selon encore une autre variante de réalisation avantageuse, les deux autres branches du pont de mesure ont de préférence une impédance identique.

Pour parfaire l'identité entre les branches opposées du pont de mesure, on peut avantageusement combiner la self de blindage avec une deuxième feuille métallique identique à la feuille métallique mobile, cette deuxième feuille métallique étant disposée à une distance pré-déterminée de la self de blindage. Pour simplification et pour occuper un espace minimal, il peut être collé contre la self de blindage, à l'extéricur du pont de mesure, donc à l'opposé du dispositif de mesure.

Avantageusement, on règle le pont de mesure à une valeur zéro, pour une valeur de distance pré-déterminée, par exemple voisine de zéro, c'est-à-dire que la feuille métallique mobile est quasi en contact avec l'élément inductif de mesure.

Selon un deuxième aspect, l'invention concerne un procédé d'amélioration du fonctionnement d'un dispositif de mesure du positionnement d'un élément supporté, comprenant un patient, par un dispositif de support déformable comprenant un matelas, en particulier anti-escarre, et une déformation corrélée dudit dispositif de support déformable résultant de l'action dudit élément agissant sur ledit dispositif de support déformable en relation avec le volume et la forme dudit élément supporté, ledit dispositif de mesure comprenant un film souple, flexible, une feuille mince métallique, déplaçable et déformable dans l'espace soumise à un déplacement et à une déformation mesurée, en relation avec le mouvement et la déformation du dispositif de support déformable, causé par ledit élément supporté, ladite feuille mince métallique coopérant avec le dispositif de support de l'élément à supporter comprenant le patient, et un élément variateur d'impédance, comprenant une self d'induction de mesure de la distance de déplacement dudit film souple relié à un dispositif oscillateur délivrant un signal fonction de la mesure de la distance de déplacement. Le procédé consiste à intégrer ledit élément variateur d'impédance de mesure dans un pont de mesure faisant partie du dispositif de mesure, relié audit dispositif oscillateur selon une configuration selon laquelle ledit oscillateur fonctionne à fréquence essentiellement constante, et consiste à prévoir aussi que la branche du pont de mesure opposée à l'élément variateur d'impédance comprend une self d'induction de blindage.

D'autres caractéristiques de ce procédé résultent également de la description précédente et suivante de l'invention à partir de la description prise dans son ensemble, intégrant les figures qui font partie intégrante de l'invention.

D'autres buts, caractéristiques et avantages de l'invention apparaîtront clairement à un homme de l'art à partir de la description suivante qui va être faite en référence à plusieurs modes de réalisation actuellement préférés de l'invention donnés simplement à titre d'illustration et qui ne sauraient donc en aucune façon limiter la portée de l'invention. Dans les dessins :
- la figure 1 représente schématiquement un mode de réalisation d'un appareil de support tel que décrit à la figure 2 du document antérieur du Déposant FR-A-2.718.347 = EP-A-676.158 ;
- la figure 2 reprend de manière légèrement modifiée la figure 6 du même document antérieur du Déposant FR-A-2.718.347 = EP-A-676.158 ;
- la figure 3 représente schématiquement une partie du circuit électronique de l'oscillateur, faisant apparaître le dispositif de mesure de la position d'un élément à supporter, de préférence un patient, lequel dispositif comprend une combinaison de déplacement, comprenant une combinaison d'un film souple, flexible d'une feuille mince métallique déplaçable et déformable dans l'espace, et d'une self d'induction, la feuille mince métallique étant disposée sur un dispositif de support déformable, tel qu'un matelas, de manière à être déplacée lors de l'enfoncement de l'élément à supporter dans le dispositif de support déformable, selon la solution technique décrite dans ce document antérieur du Déposant FR-A-2.718.347 = EP-A-676.158 ;
- la figure 4 représente la courbe de fréquence et de tension obtenue en fonction de la distance au point le plus proche de la feuille métallique déformée, dans le cadre du dispositif antérieur du Déposant, représenté à la figure 3 annexée. En abscisse, la distance au point le plus proche de la feuille est indiquée en centimètres et en ordonnée, soit la fréquence en kHz, soit la tension en Volts ;
- la figure 5 représente schématiquement un premier mode de réalisation d'un appareil de support selon la présente invention comprenant un dispositif de support à chambre unique ;
- la figure 6 représente la partie du circuit électronique de l'oscillateur selon la présente invention, intégrant le dispositif de mesure de la position du point le plus proche de la feuille, donc du dispositif de support et à son tour de l'élément à supporter, du type décrit à la figure 3, dans un pont de mesure ;
- la figure 7 représente les courbes de fréquence et de tension obtenues selon la présente invention selon les mêmes données que celles énoncées pour la figure 4 ;
- la figure 8 représente les mêmes courbes de fréquence et de tension obtenues d'une part avec l'invention, représentées à la figure 7 et en pointillés ; et d'autre part, selon l'art antérieur du Déposant, représentées à la figure 4 et en traits continus, pour une meilleure comparaison.

En référence à la figure 1, un appareil de support de l'art antérieur, selon le document FR-A-2.718.347 = EP-A-676.158 est représenté par le numéro de référence général 10. Cet appareil de support permet de supporter un élément, en particulier comme représenté le corps d'un patient P.

Cet appareil 10 comprend un dispositif de support proprement dit 12, par exemple un matelas, comprenant au moins une chambre fermée ou à échappement contrôlé 14, souple, gonflable, pouvant par exemple être composée d'une multiplicité de boudins gonflables communiquant entre eux, ladite chambre 14 étant gonflable sous une pression de gonflage initiale pré-déterminée, réglable. Cette chambre 14 présente une face supérieure 15 servant de support de l'élément à supporter P, une face inférieure 16 qui peut, par exemple, reposer sur un sommier (ici non représenté) ou moyen équivalent. L'appareil comprend également des moyens 18 d'asservissement de la pression de remplissage de la chambre 14 en fonction de la distance d'enfoncement dans le dispositif support de l'élément à supporter, par exemple comprenant des moyens de remplissage 20, tels que des moyens de pompage 20, d'un fluide de remplissage de la chambre 14, tel qu'un gaz, en particulier l'air, ou un liquide, en particulier de l'eau, et des moyens d'évacuation tels qu'une vanne 22.

Cet appareil comprend aussi des moyens 30 de mesure de la position D résultant de la déformation de la face supérieure 15 de la chambre 14 relativement à la face inférieure 16.

Ces moyens de mesure 30 comprennent un élément métallique 32, avantageusement sous forme d'une feuille mince, déplaçable et déformable dans l'espace, solidaire de la face supérieure 15 de la chambre 14, ici à l'intérieur de la chambre 14, ledit mouvement et ladite déformation étant causés par la pénétration du volume et la forme de l'élément à supporter, de préférence un patient, dans ledit dispositif de support déformable, de préférence un matelas, ladite feuille métallique coopérant avec au moins un élément inductif 34 formant détecteur de position, solidaire de la face inférieure 16 de ladite chambre 14 qui peut être disposé à l'intérieur de la chambre, intégrée à la face inférieure de la chambre 14, ou solidarisée extérieurement à la face inférieure 16 de la chambre 14, comme représenté.

L'appareil comprend aussi des moyens de contrôle 40 agissant sur les moyens 18 d'asservissement de la pression de gonflage de la chambre 14 pour maintenir, au cours du support, la position du point le plus proche de l'élément supporté P à une distance D mesurée séparant la face supérieure 15 de la face inférieure 16 de la chambre 14 de préférence à une valeur de distance prédéterminée par exemple essentiellement constante, c'est-à-dire essentiellement égale à, ou dans une variation acceptable, relativement à une distance de consigne Dc.

Les moyens de contrôle 40 peuvent avantageusement comprendre une centrale de commande 42 comprenant une unité centrale électronique ou électromécanique ayant une mémoire qui reçoit en permanence ou par intermittence des signaux proportionnels à la valeur de position mesurée Dm du point le plus proche de la feuille corrélée à la position la plus proche de l'élément supporté P, transmise par les moyens de mesure 30 précités, et qui comparent les valeurs de position mesurée Dm avec la valeur de distance de consigne Dc. La centrale de commande 42 commande les moyens 20, 22 d'asservissement de la pression de gonflage de la chambre 14 pour aboutir en permanence à une distance mesurée Dm, essentiellement égale à, ou dans une variation acceptable relativement à la distance de consigne De.

Les moyens de contrôle 40 peuvent comprendre un dispositif oscillateur 44 qui est représenté en détail à la figure 3 couplé à l'élément inductif 34, tel qu'une bobine d'induction, ou self, un dispositif amplificateur 46 dont l'amplification peut être réglée par un dispositif de réglage de consigne 48 définissant la distance de consigne Dc. L'amplificateur 46 est ensuite couplé à un dispositif de régulation proportionnelle intégrale 50 couplé à un dispositif adaptateur 52 dont la sortie est couplée à la centrale de commande 42.

Ces moyens de commande 40 sont décrits en détail dans le document précédent du déposant FR-A- 2 718 347 = EP-A-676.158, en référence aux figures 1 à 4 et 6 et dans la description qui s'y rapporte.

Dans l'exemple de réalisation de la figure 1 l'élément inductif 34 tel qu'une bobine ou self d'induction est par exemple disposé sur un élément de renforcement 36 positionné au niveau de la zone de l'élément à supporter P d'une plus grande masse ou proéminence, ici la zone du sacrum du patient P comme cela est aussi expliqué dans le document antérieur du déposant pré-cité.

Avec cet appareil antérieur du déposant, tel que représenté aux figures 1 à 3 annexées, on obtient des courbes de fréquence et de tension en fonction de la distance au point le plus proche de la feuille métallique 32 déformée vis à vis de l'élément ou self d'induction 34, représentées à la figure 4 annexée. On observe que la valeur de la fréquence varie en fonction de la distance au point le plus proche entre environ 5,5 et 6,5 kHz. Cette variation de fréquence est importante puisqu'elle est de l'ordre de 20 % de la fréquence initiale et qu'elle constitue un phénomène parasite relativement à la valeur de tension que l'on voudrait sensiblement proportionnelle à la distance. En outre, cette variation de fréquence peut induire des problèmes de compatibilité électro-magnétique. Enfin, avec cette solution antérieure, et comme il ressort de la figure 4, la variation de la tension en fonction de la distance est relativement faible puisqu'elle varie entre 0,5 V initialement et environ 2,5 V, pour une variation en distance de 10 cm, ce qui implique des difficultés de traitement du signal.

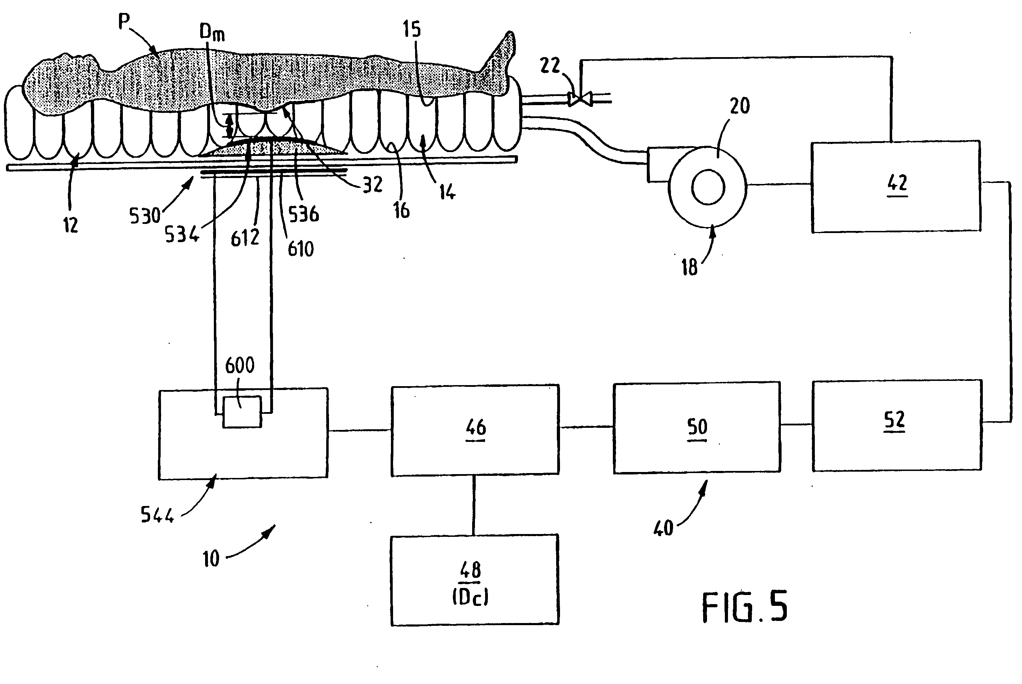

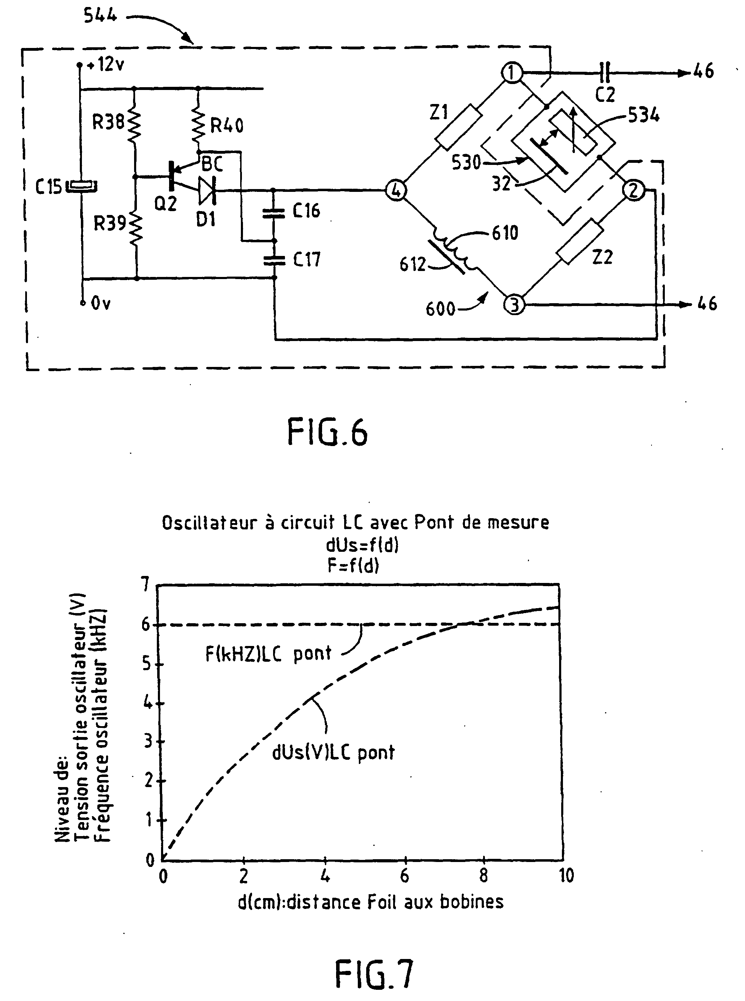

Dans le cadre de la présente invention, telle que représentée en référence aux figures 5, 6, 7 et 8, l'appareil est modifié de façon que le dispositif de mesure comprenne un élément variateur d'impédance de mesure de la position de l'élément supporté intégré dans un pont électronique de mesure. Par simplification et pour une meilleure compréhension, on a repris les éléments identiques à ceux du document antérieur du déposant avec les mêmes numéros de référence, tandis que les éléments modifiés utilisent la même référence augmentée de 500. Ainsi, dans le cadre de la présente invention, l'oscillateur antérieur 44 est modifié et est représenté par le numéro de référence 544 et son contour est représenté en pointillés à la figure 6. Le dispositif de mesure antérieur 30 est maintenant référencé 530 car il fait partie intégrante d'un pont électronique de mesure 600 qui sera décrit en détail plus loin. L'élément métallique, qui est inchangé, est toujours référencé 32 et l'élément inductif antérieur 34 est maintenant constitué plus généralement par un élément variateur d'impédance référencé 534 qui est intégré au pont de mesure 600. Cet élément variateur d'impédance peut être choisi parmi le groupe consistant d'un élément résistif, par exemple une mousse conductrice ; un élément capacitif, dont par exemple ledit film souple, flexible d'une feuille métallique qui peut être constituée par la feuille mince métallique 32 est l'une des composantes du condensateur ; d'un élément inductif, en particulier une self inductive de mesure, comme représenté car constituant le mode de réalisation actuellement préféré ; soit encore d'un élément composé à partir d'une combinaison quelconque des trois éléments de base précités.

Dans le cas de la présente invention, il est une caractéristique essentielle que le film souple, flexible soit réalisé en une feuille métallique, mince électriquement conductrice qui soit déformable dans l'espace. Une épaisseur généralement satisfaisante de cette feuille mince métallique est comprise entre environ 10 et 40 µm. Cette feuille mince métallique est de préférence positionnée au voisinage de la région de l'élément à supporter qui a sa plus grande masse ou qui est la plus protubérante, en particulier la région sacrée dans le cas d'un patient P dans cet exemple, et de ce fait l'élément variateur d'impédance 534 sera aussi disposé dans la même région sacrée pour faire face à la feuille mince métallique.

Les sommets des branches du pont de mesure sont référencés respectivement 1, 2, 3 et 4. L'élément de mesure 534 est par exemple relié aux sommets 1 et 2. Le sommet 1 est relié au sommet 4 par une branche comprenant une première impédance Z1 ; le sommet 4 est relié au sommet 3 par une branche qui se trouve opposée à la branche comprenant l'élément de mesure 534. Cette branche opposée comprend une self de blindage 610 dont le rôle sera expliqué plus loin. Le sommet 3 est relié au sommet 2 par une branche comprenant ici une deuxième impédance Z2. Les sommets 1 et 3 du pont de mesure sont aussi reliés à l'amplificateur 46, éventuellement par l'intermédiaire d'au moins une capacité de découplage C2.

On notera que l'oscillateur 544 se compose en pratique d'une partie statique constituée par le pont de mesure 600, les condensateurs C16 et C17 et une partie dynamique constituée du transistor Q2 et ses éléments de polarisation, ce qui est bien compréhensible à l'homme de l'art. La partie dynamique est reliée aux sommets 4 et 2 du pont de mesure 600.

Avantageusement, selon la présente invention, la self de blindage 610 est identique à la self d'induction de mesure 534, ce qui permet que lors d'influences extérieures, par exemple causées par des éléments métalliques tels que le lit, la self de blindage 610 et la self de mesure 534 varient de manière identique. Egalement, les deux autres branches ont de préférence une impédance Z1, Z2 identique. Pour parfaire l'identité entre les branches opposées du pont de mesure 600, il est préféré de combiner la self de blindage 610 avec une deuxième feuille métallique 612 identique à la feuille métallique mobile 32, cette deuxième feuille métallique 612 est disposée à une distance pré-déterminée de la self de blindage 610. Par simplification et pour occuper un espace minimal, elle peut être collée contre la self de blindage 610 à l'extérieur du pont de mesure, donc à l'opposé du dispositif de mesure 530.

Par cette conception du pont de mesure, on peut régler le pont 600 à une valeur zéro pour une valeur de distance pré-déterminée, par exemple voisine de zéro, c'est-à-dire que la feuille métallique mobile 32 est quasi en contact avec la self d'induction 534.

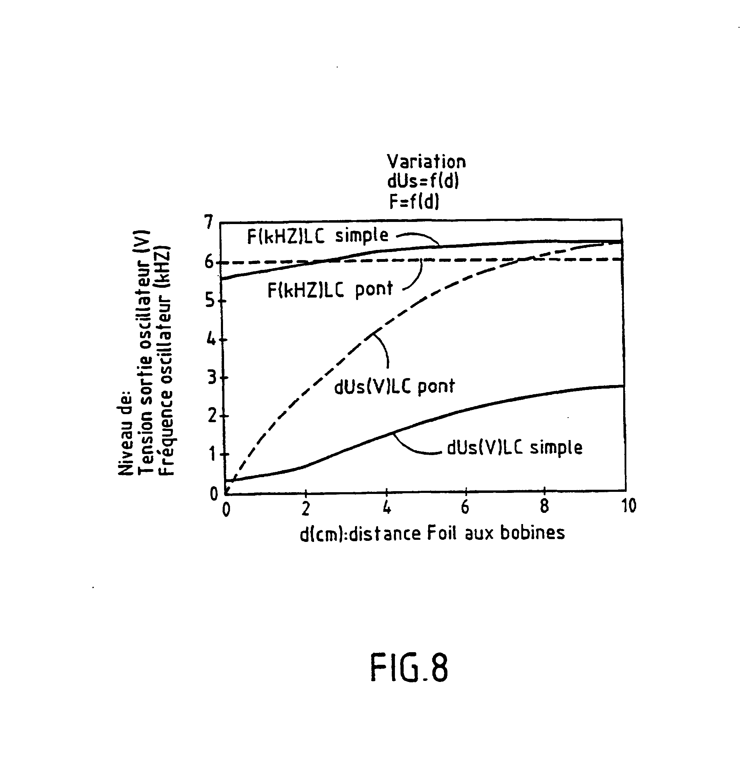

Avec cette conception selon l'invention, on obtient les courbes de fréquence et de tension représentées en pointillés aux figures 7 et 8 en fonction de la distance du point le plus proche de la feuille métallique 32 déformée, par rapport à la self de mesure 534. On observe que la fréquence est essentiellement constante de sorte que l'oscillateur 544 est devenu un oscillateur à fréquence fixe dans les conditions de fonctionnement prévues, ici à 6 kHz environ.

Par contre, la courbe de tension varie d'une manière importante en fonction de la distance, d'une valeur zéro pour une distance fixée initialement à zéro jusqu'à une tension de 6,5 Volts environ pour une distance de 10 cm, ce qui représente un écart de 6,5 Volts contre environ 2,5 Volts dans la solution antérieure représentée en traits continus à la figure 4 et rappelée en figure 8.

Ainsi, grâce à l'invention on obtient une plus grande sécurité de traitement de la tension en fonction de la distance, avec une fréquence fixe procurant les avantages précédemment décrits. En outre, on constate que la courbe de tension est sensiblement proportionnelle sur une majeure partie de la distance, qui est en fait celle dans laquelle la régulation doit se produire, ce qui n'était pas le cas dans le cadre de la solution antérieure représentée aux figures 4 et 8 où l'on observe une variation moins progressive.

Il est à noter que dans le cas de l'invention le support d'un corps ayant un grand volume comme c'est le cas du corps d'un patient, introduit une notion de volume, par conséquent distribution du poids sur une surface de contact et de morphologie qui ne peut pas être représenté par la simple mesure d'une distance comme cela a été le cas dans le cadre des dispositifs de l'art antérieur et dans l'invention, le fait que la feuille mince métallique soit souple, flexible et déformable dans l'espace est une caractéristique importante et critique puisque la déformation de la feuille correspondra en quelques sortes à la forme du corps et impliquera que le système fournit une réponse qui correspond au positionnement du corps dans le support tel que vu par le détecteur en fonction de la morphologie du corps et pas seulement en fonction d'un déplacement plus près ou plus loin par rapport à l'élément variateur d'impédance comme 534.

## Revendications

1. Appareil (10) de support d'un élément à supporter, comprenant un patient P, comprenant un dispositif de mesure (530) pour mesurer le positionnement de l'élément supporté (P) par un dispositif de support déformable (12) comprenant un matelas avantageusement anti-escarre, et une déformation corrélée du dispositif de support déformable (12) résultant de l'action dudit élément (P) agissant sur ledit dispositif de support en relation avec le volume et la forme dudit élément supporté, ledit dispositif de mesure (530) comprenant un film souple, flexible d'une feuille mince métallique (32) déplaçable et déformable soumise à un déplacement et une déformation à mesurer, en relation avec le mouvement et la déformation du dispositif de support déformable (12), causés par ledit élément supporté (P), et un élément variateur d'impédance (534), comprenant une self d'induction de mesure de la distance de déplacement (Dm), dudit film souple (32), relié à un dispositif oscillateur (544), délivrant un signal fonction de la mesure de la distance de déplacement, **caractérisé en ce que** ledit dispositif de mesure (530) comprend un pont électronique de mesure (600) intégrant ledit élément variateur d'impédance de mesure (534), relié audit dispositif oscillateur (544), selon une configuration selon laquelle ledit oscillateur fonctionne à fréquence essentiellement constante ; et aussi **caractérisé en ce que** la branche du pont de mesure (610) opposée à l'élément variateur d'impédance (534) comprend une self d'induction de blindage (610).

2. Appareil selon la revendication 1, **caractérisé en ce que** la feuille métallique est positionnée au voisinage de la région du patient qui a sa plus grande masse ou qui est la plus protubérante, en particulier la région sacrée.

3. Appareil selon la revendication 1, **caractérisé en ce que** la self d'induction de blindage (610) est disposée à une distance prédéterminée de l'élément de mesure (534) pour inhiber toute influence d'une masse métallique située en dessous du dispositif de mesure (530) ou dans son environnement.

4. Appareil selon l'une des revendications 1 à 3, **caractérisé en ce que** la self de blindage (610) et la self d'induction de mesure (534) sont identiques.

5. Appareil selon l'une des revendications 1 à 4, **caractérisé en ce que** les deux autres branches du pont de mesure (600) ont une impédance Z1, Z2 identique.

6. Appareil selon l'une des revendications 1 à 5, **caractérisé en ce que** la self de blindage (610) est combinée avec une deuxième feuille métallique (612) identique à la feuille métallique mobile (32), cette deuxième feuille métallique (612) étant disposée à une distance prédéterminée de la self de blindage (610).

7. Appareil selon la revendication 6, **caractérisé en ce que** la deuxième feuille métallique (612) est collée contre la self de blindage (610) à l'extérieur du pont de mesure, donc à l'opposé du dispositif de mesure (530).

8. Appareil selon l'une des revendications précédentes, **caractérisé en ce que** le pont (600) est réglé à une valeur zéro pour une valeur de position prédéterminée, par exemple voisine de zéro, c'est-à-dire que dans ce cas la feuille métallique mobile (32) est quasi en contact avec l'élément inductif de mesure (534).

9. Appareil selon l'une des revendications précédentes, dans lequel le dispositif de support comprend au moins une chambre (14) fermée ou à développement contrôlé, souple, gonflable à une pression de gonflage prédéterminée réglable **caractérisé en ce qu'**il comprend aussi des moyens de contrôle (40) recevant le signal du dispositif oscillateur (544) et agissant sur des moyens (18) d'asservissement de la pression de gonflage de la chambre (14) pour maintenir, au cours du support, la position du point le plus proche de l'élément supporté (12) à une distance (D) mesurée séparant la face supérieure (15) de la face inférieure (16) de la chambre (14), de préférence à une valeur de position prédéterminée, par exemple essentiellement constante, c'est-à-dire essentiellement égale à, ou dans une variation acceptable, relativement à une distance de consigne (Dc).

10. Procédé d'amélioration du fonctionnement d'un dispositif de mesure du positionnement d'un élément supporté (P), comprenant un patient (P), par un dispositif de support déformable (12) comprenant un matelas, en particulier anti-escarre, et une déformation corrélée dudit dispositif de support déformable (12) résultant de l'action dudit élément (P) agissant sur ledit dispositif de support déformable (12) en relation avec le volume et la forme dudit élément supporté (P), ledit dispositif de mesure comprenant un film souple, flexible, une feuille mince métallique (32), déplaçable et déformable dans l'espace soumise à un déplacement et à une déformation mesurée, en relation avec le mouvement et la déformation du dispositif de support déformable (12), causé par ledit élément supporté (P), ladite feuille mince métallique coopérant avec le dispositif de support (12) de l'élément à supporter comprenant le patient (P), et un élément variateur d'impédance (534), comprenant une self d'induction de mesure de la distance de déplacement (Dm) dudit film souple (32 relié à un dispositif oscillateur (544) délivrant un signal fonction de la mesure de la distance de déplacement, **caractérisé en ce qu'**il consiste à intégrer ledit élément variateur d'impédance de mesure (534) dans un pont de mesure (600) faisant partie du dispositif de mesure (510), relié audit dispositif oscillateur (544) selon une configuration selon laquelle ledit oscillateur fonctionne à fréquence essentiellement constante, et **en ce qu'**il consiste à prévoir aussi que la branche du pont de mesure (610) opposée à l'élément variateur d'impédance (534) comprend une self d'induction de blindage (610).

11. Procédé selon la revendication 10, **caractérisé en ce que** le dispositif de support (12) comprend au moins une chambre fermée gonflée ou dégonflée par introduction ou échappement d'un fluide, par exemple de l'air.

12. Procédé selon l'une des revendications 10 ou 11, **caractérisé en ce que** la feuille mince métallique (32) est solidaire de la face supérieure (15) de la chambre (14), coopérant avec au moins un élément variateur d'impédance (534) formant un détecteur de position, solidaire de la face inférieure (16) de la chambre (14) qui peut être disposé à l'intérieur de la chambre, intégrée à la face inférieure de la chambre ou solidarisé extérieurement à la face inférieure (16) de la chambre (14).

13. Procédé selon l'une des revendications 10 à 12, **caractérisé en ce que** la self d'induction de blindage (610) est disposée à une distance prédéterminée de l'élément de mesure (534), en particulier constitué par une self de mesure (534), pour inhiber toute influence d'une masse métallique située en dessous du dispositif de mesure ou dans son environnement.

## Patentansprüche

1. Einrichtung (10) zur Auflage eines aufzunehmenden Elements mit einem Patienten P, mit einer Messvorrichtung (530) zur Messung der Position des Elements (P), das durch eine verformbare Auflagevorrichtung (12) mit einer möglichst vor Dekubitus schützenden Matratze aufgelagert ist, und einer zur verformbaren Auflagevorrichtung (12) in Korrelation stehenden Verformung, die sich aus der auf die Auflagevorrichtung wirkenden Bewegung des Elements (P) in Relation zum Volumen und zur Form des aufgelagerten Elements ergibt, wobei die Messvorrichtung (530) mit einem weichen, elastischen Überzug aus einer dünnen Metallfolie (32) versehen ist, die bei Aussetzung an eine zu messende Verschiebung und Verformung in Relation zur Bewegung und Verformung der verformbaren Auflagevorrichtung (12) durch das aufgelagerte Element (P) verschoben und verformt werden kann, und ein Impedanzänderungselement (534) umfasst, das eine zur Messung des Verschiebeweges (Dm) des weichen Überzugs (32) bestimmte Selbstinduktionsspule aufweist, die mit einer Oszillatorvorrichtung (544) zur Lieferung eines Signals in Abhängigkeit von der Messung des Verschiebeweges verbunden ist, **dadurch gekennzeichnet, dass** die Messvorrichtung (530) eine elektronische Messbrücke (600) umfasst, in welcher das mit der Oszillatorvorrichtung (544) verbundene Impedanzänderungselement (534) in einer Konfiguration integriert ist, bei welcher der Oszillator mit weitgehend konstanter Frequenz arbeitet; und außerdem **dadurch gekennzeichnet, dass** der dem Impedanzänderungselement (534) gegenüberliegende Abschnitt der Messbrücke (600) mit einer der Abschirmung dienenden Selbstinduktionsspule (610) ausgestattet ist.

2. Einrichtung nach Anspruch 1, **dadurch gekennzeichnet, dass** die Metallfolie in dem Bereich des Patienten, in dem dessen Masse am größten ist oder in dem diese am stärksten hervortritt, und vor allem in dem als optimal anzusehenden Bereich positioniert ist.

3. Einrichtung nach Anspruch 1, **dadurch gekennzeichnet, dass** die der Abschirmung dienende Selbstinduktionsspule (610) in einem vorbestimmten Abstand vom Messelement (534) angeordnet ist, um jeglichen Einfluss einer unterhalb der Messvorrichtung (530) oder in ihrer Umgebung befindlichen metallischen Masse zu verhindern.

4. Einrichtung nach irgendeinem der Ansprüche 1 bis 3, **dadurch gekennzeichnet, dass** die der Abschirmung dienende Selbstinduktionsspule (610) und die für die Messung bestimmte Selbstinduktionsspule (534) identisch sind.

5. Einrichtung nach irgendeinem der Ansprüche 1 bis 4, **dadurch gekennzeichnet, dass** die zwei anderen Abschnitte der Messbrücke (600) einen identischen Widerstand Z1, Z2 aufweisen.

6. Einrichtung nach irgendeinem der Ansprüche 1 bis 5, **dadurch gekennzeichnet, dass** die der Abschirmung dienende Selbstinduktionsspule (610) mit einer zweiten Metallfolie (612) kombiniert ist, welche der beweglichen Metallfolie (32) genau gleich ist, wobei diese zweite Metallfolie (612) in einem vorbestimmten Abstand von der der Abschirmung dienenden Selbstinduktionsspule (610) angeordnet ist.

7. Einrichtung nach Anspruch 6, **dadurch gekennzeichnet, dass** die zweite Metallfolie (612) gegen die der Abschirmung dienende Selbstinduktionsspule (610) außerhalb der Messbrücke und somit der Messvorrichtung (530) gegenüberliegend verklebt ist.

8. Einrichtung nach irgendeinem der vorstehenden Ansprüche, **dadurch gekennzeichnet, dass** die Brücke (600) auf einen Wert Null für einen vorbestimmten Positionswert beispielsweise nahe Null eingestellt ist, d.h. dass in diesem Fall die bewegliche Metallfolie (32) praktisch mit dem der Messung dienenden Induktionsmesselement (534) in Kontakt steht.

9. Einrichtung nach irgendeinem der vorstehenden Ansprüche, wobei die Auflagevorrichtung mindestens eine Kammer (14) besitzt, die geschlossen ist oder eine kontrollierte Abwicklung aufweist, elastisch ist und auf einen einstellbaren vorbestimmten Druck aufblasbar ist, **dadurch gekennzeichnet, dass** sie ebenfalls Steuereinrichtungen (40) zum Empfang des Signals von der Oszillatorvorrichtung (544) umfasst, die auf Einrichtungen (18) zur Regelung des Aufblasdrucks der Kammer (14) wirken, um während der Auflage die Position des Punktes, der dem aufgelagerten Element (12) am nächsten ist, in einem gemessenen Abstand (D), welcher die Oberseite (15) von der Unterseite (16) der Kammer (14) trennt, und möglichst auf einem vorbestimmten und beispielsweise weitgehend konstanten Positionswert, d.h. einem Wert zu halten, der relativ zu einem Sollabstand (Dc) gleich ist oder innerhalb einer zulässigen Abweichung liegt.

10. Verfahren zur Verbesserung der Arbeitsweise einer Vorrichtung zur Messung der Position eines aufgelagerten Elements (P) mit einem Patienten (P) durch eine verformbare Auflagevorrichtung (12) mit einer möglichst vor Dekubitus schützenden Matratze und zur Messung einer zur verformbaren Auflagevorrichtung (12) in Korrelation stehenden Verformung, die sich aus der auf die Auflagevorrichtung (12) wirkenden Bewegung des Elements (P) in Relation zum Volumen und zur Form des aufgelagerten Elements (P) ergibt, wobei die Messvorrichtung mit einem weichen, elastischen Überzug aus einer dünnen Metallfolie (32) versehen ist, die bei Aussetzung an eine gemessene Verschiebung und Verformung in Relation zur Bewegung und Verformung der verformbaren Auflagevorrichtung (12) durch das aufgelagerte Element (P) im Zwischenraum verschoben und verformt werden kann, wobei die dünne Metall-folie mit der Auflagevorrichtung (12) des aufzunehmenden Elements mit dem Patienten (P) und einem Impedanzänderungselement (534) zusammenwirkt, das eine zur Messung des Verschiebeweges (Dm) des weichen Überzugs (32) bestimmte Selbstinduktionsspule aufweist, die mit einer Oszillatorvorrichtung (544) zur Lieferung eines Signals in Abhängigkeit von der Messung des Verschiebeweges verbunden ist, **dadurch gekennzeichnet, dass** das zur Messung dienende Impedanzänderungselement (534) in eine zur Messvorrichtung (510) gehörige Messbrücke (600) integriert und mit der Oszillator-vorrichtung (544) in einer Konfiguration verbunden ist, bei welcher der Oszillator mit weitgehend konstanter Frequenz arbeitet, und ebenfalls **dadurch gekennzeichnet, dass** der dem Impedanzänderungselement (534) gegenüberliegende Abschnitt der Messbrücke (600) mit einer der Abschirmung dienenden Selbst-induktionsspule (610) ausgestattet ist.

11. Verfahren nach Anspruch 10, **dadurch gekennzeichnet, dass** die Auflagevorrichtung (12) mindestens eine geschlossene Kammer umfasst, die durch Einführung eines Fluids wie zum Beispiel Luft aufgeblasen und oder durch Ablassen des Fluids entleert wird.

12. Verfahren nach einem der Ansprüche 10 oder 11, **dadurch gekennzeichnet, dass** die dünne Metallfolie (32) fest mit der Oberseite (15) der Kammer (14) verbunden ist und mit mindestens einem Impedanzänderungselement (534) zusammenwirkt, das einen Positionsgeber bildet, welcher fest mit der Unterseite (16) der Kammer (14) verbunden ist und innerhalb der Kammer angeordnet werden kann, wobei die Metallfolie in die Unterseite der Kammer integriert oder außen fest mit der Unterseite (16) der Kammer (14) verbunden sein kann.

13. Verfahren nach einem der Ansprüche 10 bis 12, **dadurch gekennzeichnet, dass** die der Abschirmung dienende Selbstinduktionsspule (610) in einem vorbestimmten Abstand von dem insbesondere durch eine der Messung dienende Selstinduktionsspule (534) gebildeten Messelement (534) angeordnet ist, um jeglichen Einfluss einer unterhalb der Messvorrichtung oder in ihrer Umgebung befindlichen metallischen Masse zu verhindern.

## Claims

1. An apparatus (10) for supporting an element to be supported, comprising a patient P, comprising a measuring device (530) for measuring the positioning of the element supported (P) by a deformable support device (12) comprising an advantageously anti-bedsores mattress, and a correlated deformation of the deformable support device (12) resulting from the action of said element (P) acting on said support device in relation with the volume and shape of said supported element, said measuring device (530) comprising a supple, flexible film of a thin metallic foil (32) movable and deformable subjected to a movement and deformation to be measured, in relation with movement and deformation of the deformable support device (12) caused by said supported element (P), and an impedance-varying element (534) comprising a measurement induction coil for measuring the movement distance (Dm), of said supple film (32), linked to an oscillator device (544), delivering a signal that depends on the measurement of the movement distance, **characterised in that** said measuring device (530) comprises a measurement electronic bridge (600) integrating said measurement impedance-varying element (534), linked to said oscillator device (544), in a configuration in which said oscillator operates at an essentially constant frequency; and also **characterised in that** the branch of the measurement bridge (610) opposite the impedance-varying element (534) comprises a shielding induction coil (610).

2. The apparatus according to claim 1, **characterised in that** the metallic foil is positioned in the proximity of the region of the patient which has its greatest mass or which is most protuberant, in particular the sacral region.

3. The apparatus according to claim 1, **characterised in that** the shielding induction coil (610) is disposed at a predetermined distance from the measurement element (534), thereby preventing any influence from a metallic mass situated under the measurement device (530) or in the vicinity thereof.

4. The apparatus according to one of claims 1 to 3, **characterised in that** the shielding induction coil (610) and the measurement induction coil (534) are identical.

5. The apparatus according to one of claims 1 to 4, **characterised in that** the two remaining branches of the measurement bridge (600) are of identical impedance Z1, Z2.

6. The apparatus according to one of claims 1 to 5, **characterised in that** the shielding induction coil (610) is combined with a second metallic foil (612) identical to the movable metallic foil (32), said second metallic foil (612) being disposed at a predetermined distance from the shielding induction coil (610).

7. The apparatus according to claim 6, **characterised in that** the second metallic foil (612) is glued against the shielding induction coil (610) outside the measurement bridge, therefore opposite the measurement device (530).

8. The apparatus according to one of the preceding claims, **characterised in that** the bridge (600) is set to a zero value for a predetermined distance value, for example in the vicinity of zero, i.e. that in this case the moving metallic foil (32) is almost in contact with the measurement induction coil (534).

9. The apparatus according to one of the preceding claims, in which the support device comprises at least one chamber (14) which is closed or with controlled development, and which is supple, inflatable to a predetermined controllable inflation pressure, **characterised in that** it also comprises control means (40) receiving the signal from the oscillator device (544) and acting on servo control means (18) for servo controlling the inflation pressure of the chamber (14) to maintain, while the element is being supported, the position of the closest point of the supported element (12) at a measured distance (D) between the upper face (15) and the lower face (16) of the chamber (14), preferably at a predetermined position value, for example essentially constant, i.e. essentially equal to a relative reference distance (D_{c}) or an acceptable range of variation thereof.

10. A method of improving the operation of a measuring device for measuring the positioning of an element (P), comprising a Patient (P), supported by a deformable support device (12) comprising a mattress, in particular an anti-bedsores mattress, and a correlated deformation of said deformable support device (12) resulting from the action of said element (P) acting on said deformable support device (12) in relation with the volume and the shape of said supported element (P), said measuring device comprising a supple, flexible film, a thin metallic foil (32), movable and deformable in the space subjected to a movement and a measured deformation, in relation with movement and deformation of the deformable support device (12) caused by said supported element (P), said thin metallic foil co-operating with the support device (12) of the element to be supported comprising the patient (P), and an impedance-varying element (534), comprising a measurement induction coil for measuring the movement distance (Dm) of said supple film (32), linked to an oscillator device (544) delivering a signal that depends on the measurement of the movement distance, **characterised in that** it consists in integrating said measurement impedance-varying element (534) in a measurement bridge (600) being a part of the measurement device (510), linked to said device (544), in a configuration in which said oscillator operates at an essentially constant frequency, and **in that** it further consists in providing that the branch of the measurement bridge (610) opposite the impedance-varying element (534) comprises a shielding induction coil (610).

11. The method according to claim 10, **characterised in that** the support device (12) comprises at least one closed chamber which is inflated or deflated by the introduction or leaking of a fluid, for example air.

12. The method according to one of claims 10 or 11, **characterised in that** the thin metallic foil (32) is linked to the upper face (15) of the chamber (14), which co-operates with at least one inductive element (534) which forms a position detector, linked to the lower face (16) of the chamber (14) which can be disposed inside the chamber, integrated to the lower face of the chamber or linked to the outside of the lower face (16) of the chamber (14).

13. The method according to one of claims 10 to 12, **characterised in that** the shielding induction coil (610) is disposed at a predetermined distance from the measurement element (534), in particular constituted by a measurement induction coil (534) so as to prevent any influence from a metallic mass situated under the measurement device or in the vicinity thereof.
